# EUROPÄISCHE PATENTSCHRIFT

(11) **EP 0 443 085 B1**
(45) Veröffentlichungstag und Bekanntmachung des Hinweises auf die Patenterteilung: **24.07.1996**
(21) Anmeldenummer: 90117624.8
(22) Anmeldetag: 13.09.1990
(51) Int. Cl.: H01B 5/08

(54) **Elektrisches Freileiterseil mit integrierten Lichtwellenleitern**
Electric overhead conductor with integrated light wave guides
Câble pour lignes électriques aériennes avec des guides d'ondes lumineuses intégrés

(30) Priorität: 17.02.1990 DE 4005080
(43) Veröffentlichungstag der Anmeldung: 28.08.1991
(73) Patentinhaber: Felten & Guilleaume Energietechnik AG, D-51058 Köln (DE)
(72) Erfinder: Bausch, Joachim, Dr.-Ing., D-5253 Lindlar (DE); Mainka, Guido, Dr., D-5000 Köln 80 (DE); Levacher , Friedrich Karl, Dr., D-5024 Pulheim/Brauweiler (DE)

(56) Entgegenhaltungen:
- EP-A- 0 286 804
- DE-A- 3 538 664
- DE-A- 3 742 925
- DE-A- 3 820 730
- JP-A- 5 324 582
- J.Bausch et al. " Hochspannungsfreileitungen mit LWL ", Elektrizitätswirtschaft, Band 87, Nr.8, 1988 Seiten 462-466 * Seite 462, Punkt 2 *

## Beschreibung

Die Erfindung betrifft ein elektrisches Freileiterseil mit integrierten Lichtwellenleitern (im folgenden mit 'LWL' bezeichnet).

Ein derartiges LWL-Freileiterseil ist in EP 0 286 804 A2 beschrieben. Es hat durchmessergleiche Drähte, im Kern und der ersten Verseillage Drähte aus Stahl und in den folgenden Lagen Drähte aus Aluminium oder einer Aluminiumlegierung. Das Röhrchen für die LWL (im folgenden 'LWL-Röhrchen' genannt) ist aus Edelstahl oder faserverstärktem Kunststoff, und es ist anstelle eines Drahtes in einer unterhalb der obersten Lage befindlichen Drahtlage angeordnet, in dem dargestellten Ausführungsbeispiel anstelle eines Stahldrahtes in der ersten Lage. Die LWL sind lose in das LWL-Röhrchen eingelegt, welches mit ausgewählten Dimensionen für Außendurchmesser und Wanddicke angegeben ist. Es wird auch vorgeschlagen, den Außendurchmesser gleich oder um etwa 5 % kleiner zu wählen, als der Durchmesser des ersetzten Drahts.

Ein ähnliches Freileiterseil mit LWL-Röhrchen in einer Stahldrahtlage ist in der DE 37 42 925 beschrieben. Dort werden als Material für das LWL-Röhrchen nur bestimmte Kunststoffe ausgewählt.

Ein weiteres LWL-Freileiterseil ist in DE 38 20 730 A1 (Freileiter mit einer optischen Nachrichtenleitung) beschrieben. Hier sind Seilausführungen angegeben, bei denen die Drähte des Kerns und der einzelnen Verseillagen verschiedene Durchmesser haben. Kern und erste Lage sind aus Runddrähten aus (hauptsächlich) zugfestem Material (etwa Stahl), die zweite Lage ist aus Rund- oder Profildrähten aus (hauptsächlich) elektrisch leitfähigem Material (etwa Aluminium). Hier besteht das LWL-Röhrchen aus einer Hülle aus Metall (insbesonders aus Edelstahl), die von einer Verstärkung aus Profildraht oder Metallstreifen umgeben ist.

Der Erfindung liegt die Aufgabe zugrunde, ausgehend von einem LWL-Freileiterseil der eingangs angegebenen Art weitere vorteilhafte Seilkonstruktionen anzugeben, insbesondere die Zahl der optischen Nachrichtenleitungen (LWL) und den Schutz des LWL-Röhrchens im Seil zu erhöhen. Außerdem wird angestrebt, ein metallisches LWL-Röhrchen für den unabhängigen stromtransport einsetzbar zu machen.

Die Lösung dieser Aufgabe ist in den Merkmalen des Anspruchs 1 angegeben.

Die Lösung bringt den Vorteil einer möglichst zug- und druck-unempfindlichen Anordnung der LWL-Röhrchen im Seil.

Wie bekannt, sind die (hauptsächlich) zugfesten Drähte aus Stahl oder aus Stahl mit Aluminium-Ummantelung (Stalum) und die (hauptsächlich) elektrisch leitenden Drähte aus Aluminium oder einer Al-Legierung. Das LWL-Röhrchen ist vorzugsweise aus Edelstahl und hat gegenüber dem von ihm ersetzten Draht den gleichen oder einen um etwa 5 % kleineren Außendurchmesser.

Der weitere Vorteil einer Erhöhung der Zahl der optischen Nachrichtenleitungen (LWL) wird erreicht, wenn mehrere der zugfesten Drähte des Seils in symmetrischer Anordnung durch je ein LWL-Röhrchen ersetzt werden. Vorzugsweise geschieht dies in der ersten Drahtlage bei zwei einander diametral gegenüberliegenden Drähten.

Der Schutz des LWL-Röhrchens im Seil wird erhöht, wenn das metallene Röhrchen außen von einer gegen Abrieb oder/und Korrosion schützenden Hülle umgeben wird, die je nach Zweck und Verwendung verschieden ausgebildet ist.

Und schließlich ist es vorteilhaft, wenn das metallene Röhrchen innen einen oder mehrere LWL enthält, wobei die Lose eines jeden LWL im Röhrchen einer Dehnungsreserve des LWL von 4 bis 15 ‰ entspricht, und das Rörchen wie bekannt mit einem Gel gefüllt ist.

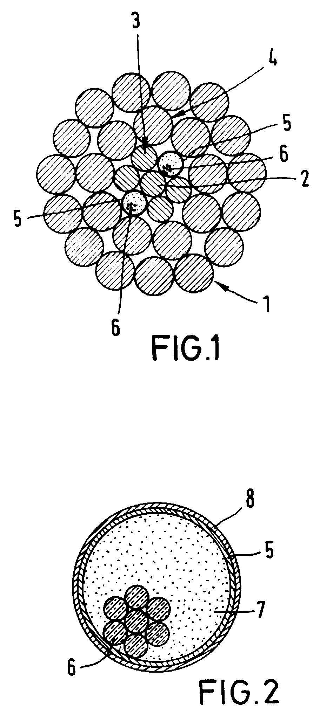

Ein Ausführungsbeispiel der Erfindung ist in der Zeichnung dargestellt und wird im folgenden näher beschrieben. Es zeigen im Querschnitt
- Fig. 1 ein dreilagiges LWL-Freileiterseil mit ungleichem Drahtdurchmesser, bei dem in der ersten Lage Stahldrähte zwei einander diametral gegenüberliegende LWL-Röhrchen angeordnet sind, und
- Fig. 2 daraus vergrößert das LWL-Röhrchen.

Bezeichnet sind mit
1 Drähte des Seils (LWL-Erdseil 22,4 mm ⌀)
2 Kerndraht aus Stahl (2,49 mm ⌀)
3 Erste Drahtlage (Verseillage) aus 4 Stahldrähten und 2 LWL-Röhrchen (2,49 mm ⌀)
4 Zweite Drahtlage aus 9 Aluminiumdrähten, darüber dritte Lage aus 15 ebensolchen Drähten (3,74 mm ⌀)
5 LWL-Röhrchen aus Edelstahl
6 LWL, Bündel aus 7 optischen Fasern 9/125
7 Gel, Röhrchenausfüllung,
8 Schutzhülle um das LWL-Röhrchen.

Der Aufbau des Seils ist aus den beiden Figuren ohne weitere Erläuterung verständlich.

Zur Schutzhülle des LWL-Röhrchens sei erläutert: Von dynamischen Untersuchungen an Freileiterseilen ist bekannt, daß im Lauf der Zeit ein leichter Abrieb (Fretting) der Einzeldrähte stattfindet. Hieran ändert auch die übliche Fettung der Drähte kaum etwas. Entsprechendes gilt für ein anstelle eines Drahtes angeordnetes LWL-Röhrchen. Ein Abriebschutz wird erreicht, wenn das metallene LWL-Röhrchen einen, im Verhältnis zur Röhrchen-Wandstärke dünnen, Mantel aus einem abriebfesten Kunststoff erhält, z. B. aus einem Polyamid (Nylon), wie es für Achslager verwendet wird. In der Praxis wird der Außendurchmesser des Metallröhrchens so weit reduziert (um die doppelte Wandstärke der Schutzhülle), daß sich das umhüllte LWL-Röhrchen dem betreffenden Seilaufbau in der üblichen Weise anpaßt.

Zum Korrosionsschutz kann das metallene LWL-Röhrchen mit einem Mantel aus einem wasserundurchlässigen, elektrisch isolierenden Polyamid oder mit einer Auflage aus Aluminium oder mit einem galvanischen überzug aus Zink versehen werden. Einerseits ermöglicht eine Schutzhülle aus einem solchen Polyamid, für das LWL-Röhrchen auch leicht korrodierende Metalle einzusetzen, anderseits verhindert sie eine Korrosion der Stahldrähte, falls das Röhrchen aus Kupfer besteht und in der unmittelbaren Nähe von Stahldrähten liegt. Zudem eröffnet eine Schutzhülle aus abriebfestem Kunststoff die vorteilhafte Möglichkeit, das Metallröhrchen für den Stromtransport zu benutzen, wie er etwa auf sehr langen Strecken zur Speisung von Repeatern für die Regenerierung der optischen Signale erforderlich ist.

Zur Dehnungsreserve der LWL im Edelstahlröhrchen (LWL-Röhrchen) sei angemerkt: Sie hängt ab
a) von den Aufbaudaten des Freileiterseils,
b) von der Schlaglänge der Stahldrahtlage, in der das LWL-Röhrchen mitverseilt ist,
c) von der Schlaglänge des LWL-Bündels innerhalb des LWL-Röhrchens,
d) vom Mastabstand,
e) vom eingestellten Seilzug beim Aufhängen des Seils bei gegebener Temperatur,
f) von der Höhe der maximal zu erwartenden Eislast und/oder Windlast,
g) von der bleibenden Dehnung des Seils pro Lebensdauer,
h) vom Durchhang des Seils und
i) von den technischen Toleranzen der verschiedenen Fertigungsstufen des LWL-Röhrchens und des Freileiterseils.

Die Dehnungsreserve wird mittels verschiedener Berechnungsformeln für den Einzelfall ermittelt und optimiert. Zu den wichtigsten der vorerwähnten Einflußgrößen gehören c) und d). In den meisten Fällen hat die Dehnungsreserve einen Wert von 4 bis 15 %o, d. h. die im Edelstahlröhrchen eingebrachten LWL sind um diesen Wert länger als das gerade gestreckte Röhrchen im zug- und druckunbelasteten Zustand. - Für die Optimierung ist es vorteilhaft, wenn das oder die LWL-Röhrchen in der ersten Stahldrahtlage des Seils angeordnet sind.

## Patentansprüche

1. Elektrisches Freileiterseil mit integrierten Lichtwellenleitern (6) bestehend aus
- einem Kerndraht (2) aus Stahl- oder aluminiumummanteltem Stahl-Draht,
- darüber mindestens eine hauptsächlich die Zugfestigkeit des Seils übernehmende Lage (3) von Drähten aus Stahl oder aluminiumummanteltem Stahl,
- darüberliegend mindestens eine hauptsächlich die Stromleitung des Seils übernehmende Lage (4) von Drähten aus Aluminium oder einer Aluminium-Legierung,
- wobei die Drähte innerhalb einer Drahtlage durchmessergleich sind,
- wobei mindestens zwei Röhrchen (5) aus Metall, im folgenden "LWL-Röhrchen" genannt, anstelle je eines Drahtes in symmetrischer Anordnung in einer hauptsächlich die Zugfestigkeit des Seils übernehmenden Lage (3) der Drähte aus Stahl oder aluminiumummanteltem Stahl eingeseilt sind,
- wobei in den LWL-Röhrchen (5) ein oder mehrere Lichtwellenleiter (6) lose eingebracht sind,
- wobei jedes LWL-Röhrchen (5) den gleichen oder einen um etwa 5 % kleineren Außendurchmesser gegenüber dem von ihm ersetzten Draht hat,
- und jedes LWL-Röhrchen (5) außen von einer Schutzhülle (8) aus abriebfestem Kunststoff umgeben ist.

2. Freileiterseil nach Anspruch 1, **dadurch gekennnzeichnet,** daß die Schutzhülle (8) der LWL-Röhrchen (5) aus wasserundurchlässigem, elektrisch isolierendem Polyamid besteht.

3. Freileiterseil nach einem der vorhergehenden Ansprüche, **dadurch gekennzeichnet,** daß sich in einer Drahtlage (3) zwei LWL-Röhrchen (5) einander diametral gegenüberliegen.

4. Freileiterseil nach einem der vorhergehenden Ansprüche, **dadurch gekennzeichnet,** daß alle Drähte (1) des Freileiterseils durchmessergleich sind.

5. Freileiterseil nach einem der vorhergehenden Ansprüche, **dadurch gekennzeichnet,** daß alle LWL-Röhrchen (5) entweder aus Edelstahl oder alle aus Kupfer bestehen.

6. Freileiterseil nach einem der vorhergehenden Ansprüche, **dadurch gekennzeichnet,** daß die erste Drahtlage (3) über dem Kerndraht aus vier Drähten und zwei einander diametral gegenüberliegenden LWL-Röhrchen (5) besteht,
daß die zweite Drahtlage (4) aus neun und die äußere Drahtlage aus fünfzehn Drähten besteht und daß die Drähte der zweiten und der äußeren Lage aus Aluminium oder einer Aluminium-Legierung bestehen und daß die Durchmesser aller Drähte und der LWL-Röhrchen sich von 2,0 bis 4,0 mm erstrecken.

7. Freileiterseil nach einem der vorhergehenden Ansprüche, **dadurch gekennzeichnet,** daß die Lose eines jeden Lichtwellenleiters im LWL-Röhrchen (5) einer Dehnungsreserve von 4 bis 15 Promille entspricht, bezogen auf das LWL-Röhrchen bei 20 °C im gerade gestreckten Zustand ohne Zugbeanspruchung und daß das LWL-Röhrchen mit einem Gel (7) gefüllt ist.

## Claims

1. An electric overhead conductor with integrated light wave guides (6), comprising
- a core wire (2) made of steel wire or aluminium-coated steel wire,
- surrounded by at least one layer (3) comprising wires of steel or aluminium-coated steel and chiefly responsible for the tensile strength of the conductor,
- surrounded by at least one layer (4) comprising wires of aluminium or an aluminium alloy and chiefly responsible for the current conduction of the conductor,
- wherein the wires within a layer of wires have the same diameter,
- wherein at least two metal tubes (5), hereinafter referred to as "LWG tubes", are symmetrically arranged, in place of a respective wire, in a layer (3) comprising steel wires or aluminium-coated steel wires and chiefly responsible for the tensile strength of the conductor,
- wherein one or more light wave guides (6) are loosely arranged in the LWG tubes (5),
- wherein each LWG tube (5) has the same outer diameter or an outer diameter smaller by approximately 5% in relation to the wire it replaces,
- and each LWG tube (5) is surrounded by a protective covering (8) of abrasion-resistant plastics.

2. An overhead conductor according to claim 1, characterised in that the protective covering (8) of the LWG tubes (5) is made of electrically insulating polyamide impermeable to water.

3. An overhead conductor according to one of the preceding claims, characterised in that two LWG tubes (5) in a layer of wires (3) are diametrically opposed.

4. An overhead conductor according to one of the preceding claims, characterised in that all the wires (1) of the overhead conductor have the same diameter.

5. An overhead conductor according to one of the preceding claims, characterised in that the LWG tubes (5) are either all made of high-grade steel or all made of copper.

6. An overhead conductor according to one of the preceding claims, characterised in that the first layer of wires (3) over the core wire comprises four wires and two diametrically opposed LWG tubes (5), in that the second layer of wires (4) comprises nine wires and the outer layer of wires comprises fifteen wires and in that the wires of the second and the outer layer are made of aluminium or an aluminium alloy and in that the diameters of all the wires and the LWG tubes range from 2.0 to 4.0 mm.

7. An overhead conductor according to one of the preceding claims, characterised in that the amount of play of any light wave guide in the LWG tube (5) corresponds to an expansion reserve of 4 to 15 per mil, related to the LWG tube at 20°C in the straightened state without tensile stress, and in that the LWG tube is filled with a gel (7).

## Revendications

1. Câble pour lignes électriques aériennes avec des guides d'ondes lumineuses (6), intégrés, comprenant
- un fil central (2) en un fil d'acier ou en un fil d'acier gainé d'aluminium,
- autour de celui-ci au moins une couche (3) de fils en acier ou en acier gainé d'aluminium, assurant principalement la résistance à la traction du câble,
- autour de celle-ci au moins une couche (4) de fils en aluminium ou en un alliage d'aluminium assurant principalement le passage du courant dans le câble,
- les fils d'une couche de fils ayant le même diamètre,
- au moins deux petits tubes (5) en métal appelés ci-après « petits tubes GOL » remplacent chaque fois un fil suivant une disposition symétrique dans la couche (3) des fils d'acier ou en acier gainé d'aluminium, couche qui assure principalement la résistance à la traction du câble,
- les petits tubes GOL (5) logent librement un ou plusieurs guides d'ondes lumineuses (6),
- chaque petit tube GOL (5) a le même diamètre extérieur ou un diamètre réduit d'environ 5 % par rapport à celui du fil qu'il remplace,
- et chaque petit tube GOL (5) est entouré d'une gaine protectrice (8) en une matière synthétique résistant à l'abrasion.

2. Câble aérien selon la revendication 1, caractérisé en ce que la gaine protectrice (8) du petit tube GOL (5) est en un polyamide isolant électrique, imperméable à l'eau.

3. Câble aérien selon l'une des revendications précédentes, caractérisé en ce que dans une couche de fils (3), il y a deux petits tubes GOL (5) en position diamétralement opposée.

4. Câble aérien selon l'une des revendications précédentes, caractérisé en ce que tous les fils (1) du câble aérien ont le même diamètre.

5. Câble aérien selon l'une des revendications précédentes, caractérisé en ce que tous les petits tubes GOL (5) sont tous soit en acier inoxydable, soit en cuivre.

6. Câble aérien selon l'une des revendications précédentes, caractérisé en ce que la première couche de fils (3) se compose, autour du fil central, de quatre fils et de deux petits tubes GOL (5) en position diamétralement opposée,
et la seconde couche de fils (4) est formée de neuf fils et la couche extérieure se compose de quinze fils, et les fils de la seconde couche et de la couche extérieure sont en aluminium ou en un alliage d'aluminium et le diamètre de tous les fils et de tous les petits tubes GOL est compris entre 2,0 et 4,0 mm.

7. Câble aérien selon l'une des revendications précédentes, caractérisé en ce que les guides d'ondes lumineuses placés librement dans les petits tubes GOL (5) ont une réserve de dilatation comprise entre 4 et 15 ‰ rapportée à un petit tube GOL à une température de 20°C à l'état allongé dans la direction rectiligne, sans sollicitation à la traction et que le petit tube GOL soit rempli d'un gel (7).
